(19) Europäisches Patentamt
European Patent Office
Office européen des brevets

(11) EP 0 933 268 A1

# (12) EUROPEAN PATENT APPLICATION

(43) Date of publication:
**04.08.1999 Bulletin 1999/31**

(21) Application number: **98830043.0**

(22) Date of filing: **30.01.1998**

(51) Int. Cl.$^6$: **B60S 1/38**, C08G 18/10, C08G 18/48, C08G 69/48, C09D 163/00

(84) Designated Contracting States:
**AT BE CH DE DK ES FI FR GB GR IE IT LI LU MC NL PT SE**
Designated Extension States:
**AL LT LV MK RO SI**

(71) Applicant:
**Cooper Industries Italia S.p.A.**
**20124 Milano (IT)**

(72) Inventor: **Marocco, Lorenzo**
**10040 Druento, Torino (IT)**

(74) Representative:
**Marchitelli, Mauro et al**
**Buzzi, Notaro & Antonielli d'Oulx Srl,**
**Corso Fiume 6**
**10133 Torino (IT)**

## (54) Surface treatment for a wiping element of a windscreen wiper blade for vehicles

(57) A wiping element of elastomeric material for windscreen wiper blades for vehicles, characterized in that it has a surface coating comprising a varnish selected in the group which consists of silicon varnishes, polyurethane varnishes or mixtures thereof.

EP 0 933 268 A1

## Description

The present invention relates to a surface treatment for a wiping element of elastomeric material for a windscreen wiper blade for vehicles, as well as a wiping element so treated. The rubber wiping elements employed in windscreen wiper blades of motor-vehicles must have the following properties:

* low friction coefficient,
* high wear resistance,
* minimum adhesion of the wiping element on the windscreen with increasing temperatures,
* minimum adhesion of dust particles on the wiping element,
* maximum resistance to the exposure to U.V. rays, and to ozone.

Up to now, to fulfill said requirements the wiping elements of windscreen wiper blades have been subjected to treatments consisting in the application of a graphite base layer. The main drawback of this known solution is that it does not permit to obtain durable results. The graphite base dust layer generally disappears after a period of use relatively short, leaving the surface of the wiping element without protection.

The object of the present invention is to provide a new wiping element which, by virtue of a particular surface treatment, permits to overcome the above drawbacks.

According to the invention, this object is achieved in that the wiping element of elastomeric material has a surface coating comprising a varnish selected in the group which consists of silicone varnishes, polyurethane varnishes or mixtures thereof.

Preferably, the surface coating comprises from 2 to 30% in weight of polydimethylsiloxane, from 20 to 90% of a mercaptoalchiltrimetosiloxane and from 1 to 15% of a catalyst based on a metallic salt of a carboxylic acid.

The mercaptoalchiltrimethylsiloxane is preferably mercaptopropiltrimetosiloxane, while the catalyst is preferably diacetoxydibuthylstannate.

The surface coating which characterizes the wiping element according to the invention is obtained by applying on the wiping element a varnish comprising from 10 to 30% in weight of a solution of polydimethylsiloxane in a mixture of ethylbenzene, o-xylene, m-xylene and p-xylene, from 40 to 80% of aliphatic solvent, from 0.2 to 2% of a coating solution based on ethylbenzene, o-xylene, m-xylene and p-xylene, from 5 to 20% of a solution of mercaptopropiltrimetosiloxane in isopropilic alcohol and from 0.5 to 4% of a catalyst based on a metallic salt of a carboxylic acid. The aliphatic solvent utilized is preferably heptane, and the catalyst is preferably diacetoxydibuthylstannate.

In a second embodiment of the invention, the surface coating comprises from 15 to 60% in weight of a siliconpolyurethanic enamel, from 2 to 15% of a catalyst based on a metallic salt of organic acids and tertiary amine and from 20 to 65% of a diluent based on aromatic hydrocarbons.

The varnish applied to the wiping elements of the windscreen wiper blades has been selected in a wide group of products very similar to each other which can be divided in two groups on the basis of the main components:

1. group of silicones
2. groups of polyurethanes.

In the group of silicon varnishes it is particularly advantageous the use of the varnishes manufactured by GE Silicones and by AKZO Nobel. These varnishes are composed by a siloxane polymer in a mixture with aromatic organic solvents which facilitate attachment of the varnish on the interested surface. The siloxanic polymer preferably has a substitution rate (R/Si) comprised between 1.1 and 1.7.

In order to facilitate the adhesion of the varnish on the substrate it is used an organic catalyzer containing atoms of tin.

In the mixture in question the most interesting components are:

polydimethyilsiloxane

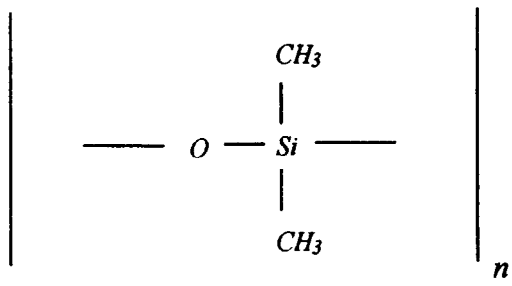

the mercaptopropiltrimetosiloxane

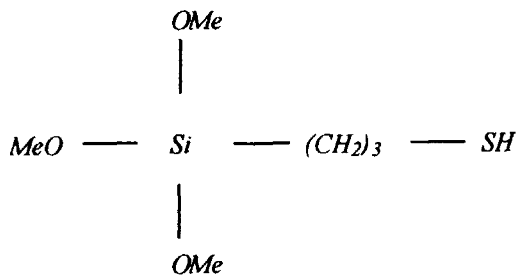

and the diacetoxydibutilstannate

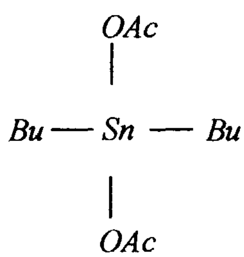

The fundamental molecular structure of the silicon-organic compounds is constituted by chains of alternated atoms of silicon and oxygen, in which the free valences of the silicon are saturated in various way, generally by acrylic or alchylic radicals. The form of the macromolecule and the state of aggregation of the polymer are influenced by the number of organic groups which are present.

The synthesis must thus obtain the double object to bind to the silicon the organic groups and also to create the bindings -O-Si-O- which are indispensable because the functionality of the molecule depends on them.

The starting point for the synthesis of the silanes is constituted by $CH_3Cl$, silicon in powder and copper in powder.

The synthesis of the chlorosilanes can be obtained by a reaction at 260°C between metallic silicon with an alchyl halide in the presence of copper as catalyzer of the reaction.

The silicon must be closely mixed with the copper and therefore the powders of the two metals are sintered under hydrogen at 1000°C.

$$2\ R\text{-}Cl + Si \rightarrow R_2SiCl_2 \text{ (in presence of Cu and at 260°C)}$$

In the specific case of the varnish in question, with a reaction with chloromethane it is obtained a mixture of dimethylchlorosilane together with other analogous components:

$$2\ CH_3Cl + Si \rightarrow (CH_3)_2SiCl_2 + CH_3SiCl_3$$

75% 10%

The main component of the reaction mixture is constituted by dimethylchlorosilane, which is resolved at 300°C in monomethyltrichlorosilane and trimethylchlorosilane,

$$2\ (CH_3)_2SiCl_2 \leftrightarrow (CH_3)_3SiCl + CH_3SiCl_3$$

In order to obtain silicon polymers, the dimethyldichlorosilane is subjected to hydrolysis.

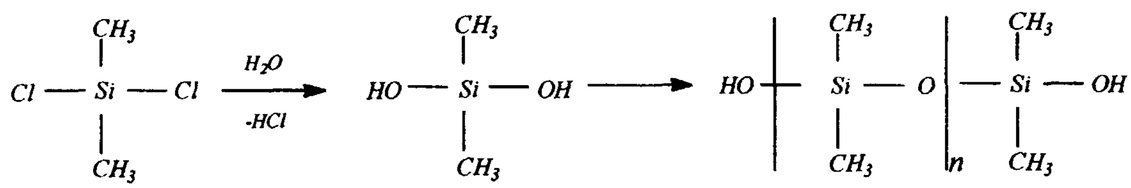


80% of the products deriving from the hydrolysis is constituted by linear silicons, having -OH terminal groups at the ends of the chains.

The hydrolysis reaction can be accelerated not only by the hydrochloric acid which is produced during the reaction, but also by metallic salts such as the cobalt naphthenate.

The properties of the silicon-organic polymers derive in part from the thermal stability of silex and of mineral silicates, in part from reactivity, solubility and plasticity of some organic substances.

Some of these characteristics are the following:

* resistance to temperatures comprised in a wide range
* resistance to solar light, to atmospheric agents, to ozone, to oxidizing agents and to high temperatures
* chemical inertia

In the second embodiment of the invention it is used, as surface coating of the wiping element, a polyurethane varnish and preferably a siliconpolyurethane varnish. The preferred components of the polyurethane varnish are polyesters with few branchings or linear polyeters, aromatic polyisocianates, aromatic hydrocarbons as diluent and catalyzers based on salts of bismuth, lead, tin and triethylendiamine.

The siliconpolyurethane varnish manufactured by TEGO BECKER is particularly advantageous for the application on wiping elements of elastomeric materials. This varnish is composed by a polyurethane synthetic resin mixed with aromatic hydrocarbons and an organic catalyzer containing atoms of tin.

The most interesting component which guarantees surprising performances to the wiping element in terms of low friction coefficient and resistance to wear and to atmospheric agents is certainly the siliconpolyurethane resin.

The polyurethanes are a family of chemical compounds which derive from the poliaddition between hydroxyls (-OH) of determined polyhydric alcohols and the isocyanic groups (-N=C=O) belonging to polyisocyanates.

In the following reaction the addition phenomenon can be easily seen:

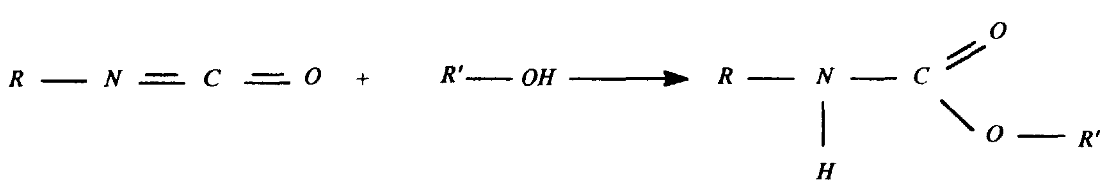

When the reaction groups are bi-functional (i.e. they have in the alcoholic component hydroxyls and in the isocyanic group two radicals -N=C=O), a development with more addition stages is obtained, according to the following scheme:

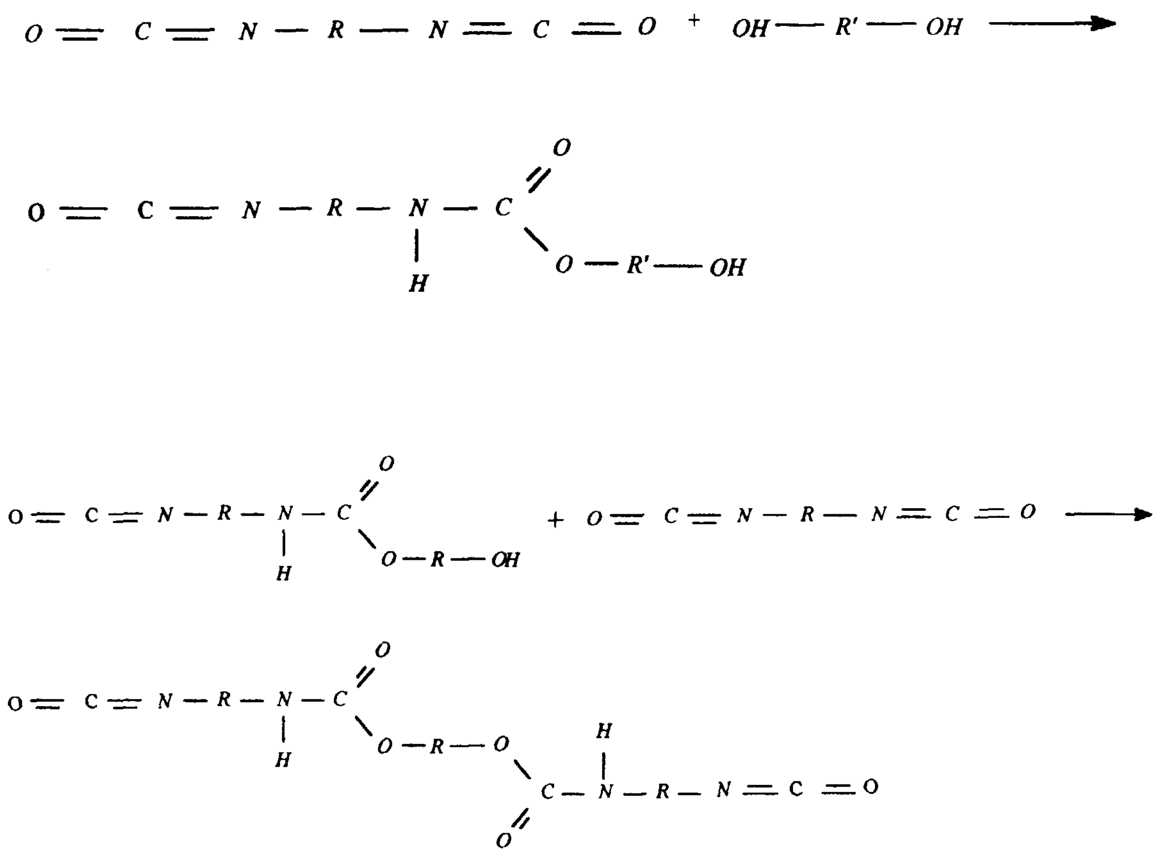

A chain is created wherein it is repeated the characteristic group called "urethane":

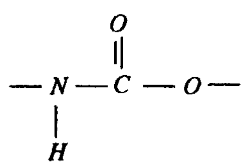

and therefore called polyurethane.

The reaction between an alcoholic group and an isocyanic group can be accelerated by the presence of catalyzers in the ambient of reaction. In the case of the varnish in question, the organic component containing atoms of tin permits to accelerate the reaction thanks to the formation of intermediate complexes between the metallic ions and the isocyanate group.

The isocyanate more frequently used in the synthesis of the polyurethanes is the toliendiisocyanate, whose structure formula is the following:

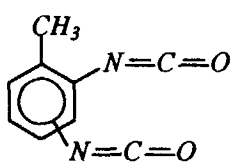

The polyurethanes for varnishes (also called urethane oils) are alchidic resins wherein the phthalic anhydride has been substituted by isocyanates. The urethane oils are produced in two stages. In the first stage a reaction is carried out between a free fatty acid and a polyhydric alcohol.

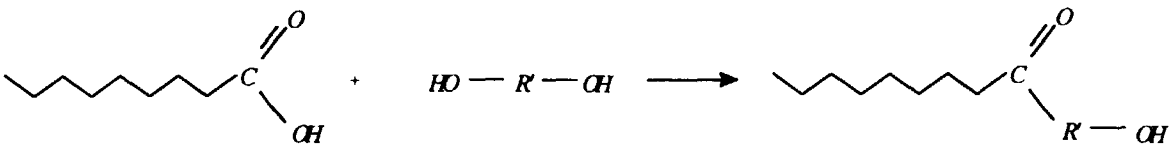

The second stage consists in the reaction between the ester which has been formed with diisocyanate at 40-100°C in the presence of a possible solvent. The isocyanate reacts with the free hydroxyl groups of the polyhydroalcohol and produces a modified polyurethane.

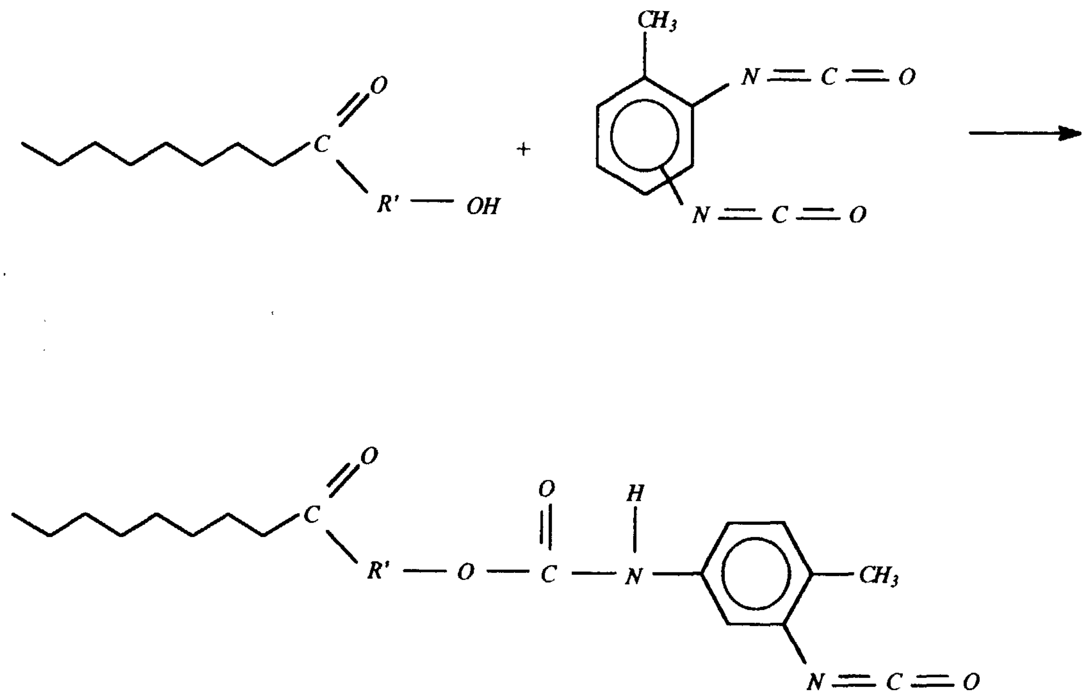

The essential reaction for obtaining the polyurethane is the reaction between a diisocyanate and the alcoholic groups of the polyhydro alcohols.

The true base of the polyurethanes are these pre-polymers of oligomeric polyester which are then further polymerized to polyurethanes by the action of diisocyanates.

In the following are indicated three examples of compositions of varnishes which can be used as coatings for windscreen wiper blades.

For each varnish it is indicated the rate (expressed as parts in weight) according to which the several components must be mixed.

In order to improve the adhesion of the varnish on the wiping elements, independently of the nature of the polymer utilized for the production of these elements, a primer of polyolefin nature can be used. In the case of varnishing according to an electrostatic method, the primer utilized is a black conductive type, while in the case of traditional varnishing (immersion or spraying) a transparent polyolefinic primer is utilized.

The varnish can be applied by spraying, by immersion or by an electrostatic system. After the application of the varnish it is provided a drying period at room temperature during about 5 minutes, followed by a polymerization phase with a duration variable depending on the temperature, for example from about 12 minutes at 100°C to about 30

seconds at 200°C.

EXAMPLE 1

It has been used a silicone varnish whose components are manufactured and marketed by GE Silicones.

| Component | GE Silicones Code | Quantity (parts in weight) |
|---|---|---|
| Solution of silicone polymer (1) | WSC4009 | 100 |
| Heptane | | 200-400 |
| Coating solution (2) | XC89-A3399 | 4 |
| Siloxane in solvent (3) | XC9615 | 40-90 |
| Catalyst (4) | YC6831 | 7,5-12 |

(1) = polydimethylsiloxane in a mixture of ethylbenzene, o -xylene, m-xylene and p-xylene
(2) = mixture of ethylbenzene, o -xylene, m-xylene and p-xylene
(3) = solution of mercaptopropiltrimetosiloxane in isopropilic alcohol
(4) = diacetoxydibuthylstannate

The results in terms of resistance to wear and to the exposure of UV rays and to ozone of the wiping element coated with the above varnish have been superior with respect to the results obtained with the traditional treatments.

During duration tests, the varnish maintained inalterate its effect of improving the smoothness for more than 500 hours. Typically, the graphitizing treatment ensure this effect for no more than 100 hours.

EXAMPLE 2

It has been used a silicone varnish whose components are manufactured and marketed by Akzo Nobel.

| Component | Akzo Nobel Code | Quantity (parts in weight) |
|---|---|---|
| Black opaque enamel | 5.4Z.72.745 | 100 |
| Component A | 5.4W.72.746 | 3,9 |
| Component B | 5.4W.72.747 | 70 |
| Component C | 5.4W.72.748 | 8,7 |
| Heptane | | 300 |
| Additive | 5.4W.72.749 | 4,8 |
| Component A: polydimethylsiloxane<br>Component B: mercaptopropiltrimetosiloxane<br>Component C: diacetossidibuthylstannate<br>Additive: polysiloxane modified with isocyanic groups. | | |

Also in this case, the results in terms of duration of the surface treatment have been superior with respect to the results obtained with traditional treatments.

EXAMPLE 3

It has been used a silicone varnish whose components are manufactured and marketed by the company Tego Becker.

| Component | Tego Becker Code | Quantity (parts in weight) |
|---|---|---|
| Siliconpolyurethan enamel | 420092 | 100 |
| Catalyst | 926007 | 15 |
| Diluent | 101708 | 90-120 |

Also with the use of the above varnish, the results in terms of duration of the surface treatment of the coated wiping elements have been superior with respect to the results obtained with traditional treatments.

## Claims

1. A wiping element of elastomeric material for windscreen wiper blades for the vehicles, characterized in that it has a surface coating comprising a varnish selected in the group which consists of silicone varnishes, polyurethane varnishes or mixtures thereof.

2. A wiping element according to claim 1, characterized in that the surface coating comprises from 2 to 30% in weight of polydimethylsiloxane, from 20 to 90% of a mercaptoalchiltrimetossiloxane and from 1 to 15% of a catalyst including a metallic salt of a carboxylic acid.

3. A wiping element according to claim 2, characterized in that the mercaptoalchiltrimetossiloxane is mercaptopropiltrimetossiloxane.

4. A wiping element according to claim 2, characterized in that the catalyst is diacetoxydibuthylstannate.

5. A wiping element according to claim 1, characterized in that the surface coating comprises from 15 to 60% in weight of a siliconpolyurethane enamel, from 2 to 15% of a catalyst including a metallic salt of organic acids and tertiary amines and from 20 to 65% of a diluent with a base of aromatic hydrocarbons.

6. A wiping element according to claim 1, characterized in that the surface coating is obtained by applying a varnish comprising from 10 to 30% in weight of a solution of polydimethylsiloxane in a mixture of ethylbenzene, o-xylene, m-xylene and p-xylene, from 40 to 80% of an aliphatic solvent, from 0.2 to 2% of a coating solution based on ethylbenzene, o-xylene, m-xylene and p-xylene, from 5 to 20% of a solution of mercaptopropiltrimetossiloxane in isopropilic alcohol and from 0.5 to 4% of a catalyst based on a metallic salt of a carboxylic acid.

7. A wiping element according to claim 6, characterized in that the aliphatic solvent is heptane.

8. A wiping element according to claim 6, characterized in that the catalyst is diacetoxidibuthylstannate.

9. A method for the treatment of a wiping element of elastomeric material for windscreen wiper blades, characterized in that it comprises the application on the wiping element of a surface coating comprising a varnish selected in the group which consists of silicon varnishes, polyurethane varnishes or mixtures thereof.

European Patent Office

# EUROPEAN SEARCH REPORT

Application Number
EP 98 83 0043

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 674 567 A (KAUSCH ET AL) 7 October 1997<br>* column 1, line 51 - column 3, line 27 * | 1,5,9 | B60S1/38<br>C08G18/10<br>C08G18/48<br>C08G69/48<br>C09D163/00 |
| A | * column 4, line 7 - line 20 *<br>* column 5, line 35 - line 45 *<br>--- | 2,6,7 | |
| X | EP 0 281 216 A (GENCORP) 7 September 1988 | 1,9 | |
| A | * page 1, line 28 - page 3, line 6 *<br>--- | 2 | |
| X | EP 0 659 857 A (SHIN-ETSU CHEMICAL) 28 June 1995 | 1,9 | |
| A | * page 3, line 19 - line 58 *<br>--- | 2,6-8 | |
| X | EP 0 562 191 A (TAKATA) 29 September 1993<br>* page 3, line 14 - line 29 *<br>--- | 1,9 | |
| X | US 5 674 951 A (HARGIS ET AL) 7 October 1997<br>* the whole document *<br>--- | 1-9 | |
| X | DE 195 47 448 A (GENCORP) 20 June 1996<br>* page 1, line 37 - line 54 *<br>----- | 1,9 | TECHNICAL FIELDS SEARCHED (Int.Cl.6)<br>B60S<br>C08G<br>C09D |

The present search report has been drawn up for all claims

| Place of search | Date of completion of the search | Examiner |
|---|---|---|
| BERLIN | 12 June 1998 | Standring, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)